# EUROPEAN PATENT APPLICATION

(11) **EP 2 364 589 A2**
(43) Date of publication of application: **14.09.2011**
(21) Application number: 11156807.7
(22) Date of filing: 03.03.2011
(51) Int. Cl.: A01N 1/00, A47F 3/04, F24F 3/14

(54) **Shrine with an inert and stable closed microclimate, particularly for the definitive preservation of mummified organic remains, and related preservation method**

(30) Priority: 08.03.2010 IT RM20100095
(71) Applicant: Universita' Degli Studi "G. d'Annunzio" Chieti-Pescara, 66013 Chieti (IT)
(72) Inventor: Capasso, Luigi, 66013 Chieti (IT); D'Anastasio, Ruggero, 66013 Chieti (IT)
(74) Representative: Leone, Mario

(57) **Abstract**

A shrine (1), and a related process for the definitive preservation of mummified organic remains, implements a stable and inert microclimate and it provides the use of a shrine (1) with walls (2, 3) made of sheets in transparent material; two PTFE-glass tabs mounted onto the walls (2, 3); a gaseous chemical line (10), connected to an inlet tap (4) and connected to a nitrogen source, comprising a scrubber vessel (7) for the nitrogen dehydration; and a discharge pipe (8) connected to an outlet tap (5) and connected to an expansion vessel (9) equipped with a hygrometer to record the relative moisture of the outlet flow, wherein the gaseous chemical line (10) is connected to a nitrogen source, by producing a dry nitrogen flow which is interrupted by leaving the shrine in overpressure in an extended rest to promote the gaseous exchanges between the mummified remains and the nitrogen atmosphere, by repeating the washing until the moment wherein the recorded moisture is lower than 40%.

## Description

The present invention relates to a shrine which is able to define an environment provided with a stable and inert confined microclimate, which can be conveniently used for the definitive preservation of mummified organic remains, such as for example archaeological, paleontological finds, relics and so on.

The invention also relates to a related preservation method using the above-mentioned shrine.

The problems of preserving the biological remains easily enters in conflict with the need for exposing such remains to the public, for example within a museum.

In fact, the remains of both human and animal soft tissues, which have been subjected to a natural or induced mummification process, are organic materials of complex nature constituting a source of information of paleobiologic type which, under normal conditions, are lost soon after the death due to the normal processes of cadaverous decomposition.

Therefore, it is necessary to devise a definitive preservative system, useful to guarantee the most lasting preservation of these biological remains, but at the same time, it allows a public use thereof by way of exhibition.

The technical problem underlying the present invention consists in providing a shrine which can obviate the decomposition risk and allow exhibiting the remains.

Such problem is solved by a shrine as specified above, comprising
- walls formed by sheets in transparent material with anti-burglary features, assembled by gluing at the respective matching edges thereof;
- two PTFE-glass taps mounted on one of said sheets, fixed at a respective hole in the appropriate sheet by gluing;
- a gaseous chemical line, connected to an inlet tap and connected to a nitrogen source or other inert gas source, comprising a scrubber vessel for the dehydration of the gases themselves; and
- a discharge pipe connected to an outlet tap and connected to an expansion vessel provided with a hygrometer for registering the relative moisture of the outlet flow.

The invention further relates to a process for preserving mummified organic remains, comprising the steps of:
a) providing a shrine provided with two PTFE-glass taps, a gaseous chemical line, connected to an inlet tap, a discharge pipe (8) connected to an outlet tap and connected to an expansion vessel provided with a hydrometer for recording the relative moisture of the outlet flow;
b) connecting said gaseous chemical line to a nitrogen source or other inert gas source, producing a dry gas flow;
c) stopping the nitrogen or other inert gas delivery keeping the shrine in overpressure;
d) leaving the closed shrine to rest for an extended period of time, thus promoting gaseous exchanges between the mummified remains and the nitrogen or other inert gas atmosphere;
e) repeating the steps (b) to (d) until the moment in which the detected output moisture is lower than 40%.

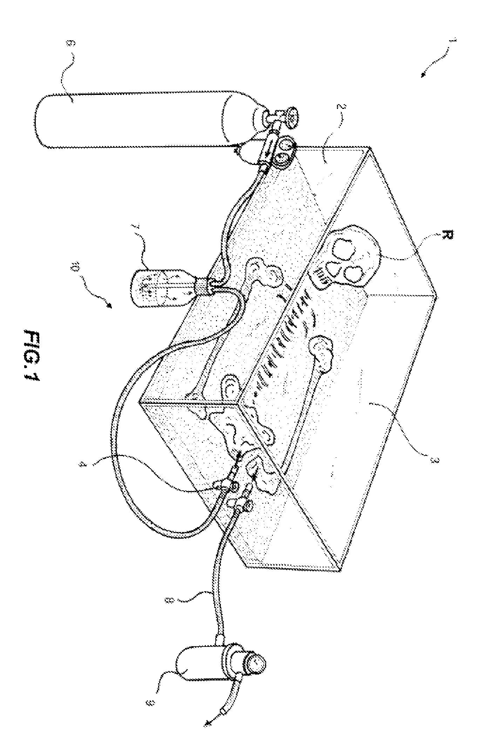

Hereinafter, the shrine and process according to the invention will be described by referring to an embodiment example thereof, illustrated in the enclosed figure 1 showing a perspective view of a shrine according to the invention.

By referring to figure 1, a shrine for preserving mummified biological remains is designated with 1.

It is substantially shaped like a parallelepiped and it shows side, lower and upper walls made of a transparent material with anti-burglary features, for example in polycarbonate multi-layered glass.

The lower wall alternatively can be constituted by a base made of other, even not transparent material, on condition that it is a sealing material.

The volume and the shape will be chosen in a suitable way, in order to house the find which will have to be preserved. However, they will have to be sufficiently reduced, in order to contract to the bare minimum the atmosphere contained in the shrine 1, surrounding the find itself.

Said walls, designated with 2 (side walls) and 3 (upper wall), can be obtained from glass sheets, properly cut with a laser pantograph to reduce to the minimum the errors and the tolerances.

The assembly of the glass sheets takes place by gluing, with the application, at the edges of the sheets properly shaped to match therebetween, of a single silicone layer or, alternatively, of a ultraviolet catalysed resin.

In both these cases gluing can be fired in oven at suitable temperature.

The upper glass sheet, operating as upper wall 3, will constitute the cover of the shrine 1 and it will then assembled as last one, after having introduced the find R inside the shrine 1.

On one of said sheets, at one side or upper wall, two PTFE-glass taps are mounted, respectively designated with 4 and 5.

This type of tap is made of borosilicate glass, equipped with a PTFE key to guarantee a greater resistance to etching.

The PTFE key is then auto-lubricating and it avoids the need to introduce lubricating fats.

As for the assembly, the taps are fixed at a respective hole in the appropriate sheet by applying silicone or a ultraviolet catalysed resin.

Once assembled the last glass sheet, the shrine 1 constitutes a real bottle with gas flow, by connecting the two taps 4, 5 to a gaseous chemical line 10 which will allow to wash the find with inert gas, in particular nitrogen, and then to replace the inner atmosphere with dry nitrogen which in case can be replaced with another inert gas.

In order to implement this process step, through one of the inlet taps 4, nitrogen gas coming from a source such as for example a cylinder 6 with nozzle, is made to convey inside the shrine.

The nitrogen gas is subjected to scrubbing in a vessel 7 containing anhydrous calcium carbonate in order to provide a total and complete dehydration of the nitrogen gas.

After its passage in the vessel containing anhydrous calcium carbonate 7, the nitrogen gas can be subjected to scrubbing in additional vessels containing antimicrobial substances in order to eliminate possible contaminating biological agents.

A discharge pipe 8, which is used to make the inert gas to flow into an expansion vessel 9 wherein an electric hygrometer is positioned allowing to record the relative moisture of the outgoing flow, is connected to the second tap 5.

The dry nitrogen flow is maintained at least for one hour or for some hours, indicatively about two hours for each shrine cubed meter, thereafter one proceeds with closing the outlet tap 5, after few seconds, with closing the inlet tap 4, so as to create inside the shrine 1 a light overpressure. The closed structure is left to rest for an extended period of time of at least one day, for example two days, thus promoting gaseous exchanges between the mummified remains and the nitrogen atmosphere.

At the end of this period of rest one proceeds with re-activating the nitrogen flow as described above, having the opportunity of measuring the moisture of the outlet gas by applying an electronic hygrometer positioned in the outlet expansion bottle.

Nitrogen inletting cycles (washing) and standing cycles (rest) are repeated until the recorded outlet moisture is lower than 40%.

At this point one proceeds with closing the taps 4, 5, being careful in determining a light overpressure inside the shrine 1.

This washing and resting process can be repeated after a still longer period of time, for example 30 days, thereafter one proceeds with closing definitely the taps 4, 5 by placing a drop of paraffin on the respective ground cone.

The preferential nitrogen choice as inert gas is due to the long experimentation and it guarantees that the molecule of this inert gas is sufficiently large so that it does not allow the migration thereof, either through the glass or through the gluing.

If one is in front of mummified finds particularly enriched with moisture, it is convenient to inlet inside the shrine a chemical moister subtracter, e.g. iron powder or silica gel or other hygroscopic products of commercial type, however by keeping into consideration the fact that the chemical reactions for subtracting water vapour are exothermal and they can produce considerable, even if temporary, increases in temperature inside the shrine 1.

One of said walls, for example the one with the inserted taps 4, 5, can have a mixed thermo-hygrometric sensor, being careful to insert inside the glass only the sensor, whereas the reader has to be left however outside the shrine, as it needs power supply which has to be provided through a battery.

The above-described shrine and the related preservation process allow then to satisfy the following needs:
- to guarantee the complete insulation of the find against the environment and in particular to be perfectly water-tight with respect to the microbiological pollutants (living organic contaminants), both with respect to the environmental physical factors (mainly the moisture), and with respect to the contaminants of chemical nature (acidulants existing as atmospherical pollutants);
- to guarantee a suitable reversibility of the conservative processes, in order to allow subsequent studies or pick-ups and laboratory analyses, as well as the implementation of possible new more advanced preservation methods than the actual one ;

- to guarantee, as far as possible, the find safety;
- to allow the find visibility;
- to produce a manufactured product and a system resulting lasting as much as possible, so as to be considered definitive;
- to reduce to the minimum, even if not to eliminate completely, the maintenance needs.

To the above-described shrine and to the related preservation process a person skilled in the art, in order to satisfy additional and contingent needs, can introduce several additional modifications and variants, all however within the protective scope of the present invention, as defined by the enclosed claims.

## Claims

1. A shrine (1) for the definitive preservation of mummified organic remains comprising:
• walls (2, 3) formed by anti-burglary sheets made of transparent material, assembled by gluing of respective matching edges thereof;
• two PTFE-glass taps (4,5) mounted on one of said sheets, fixed at a respective hole in the appropriate sheet by gluing;
• a gaseous chemical line (10), connected to an inlet tap (4) and connected to an inert gas source, comprising a scrubber vessel (7) for gas dehydration; and
• a discharge pipe (8) connected to an outlet tap (5) and connected to an expansion vessel (9) provided with a hygrometer for registering the relative moisture of the outlet flow.

2. The shrine (1) according to claim 1, wherein the walls (2, 3) are made of polycarbonate multi-layer glass.

3. The shrine (1) according to claim 1, wherein said gluing comprises the application of a single silicone layer, or alternatively of an ultraviolet catalyzed resin, at the edges of the sheets, the edges being suitably shaped in order to be matching between them.

4. The shrine (1) according to claim 1, wherein, in the expansion vessel (9), the hygrometer is an electronic hygrometer.

5. The shrine (1) according to claim 1, comprising a chemical moisture subtracter, e.g. iron powder, silica gel or a hygroscopic product.

6. The shrine (1) according to claim 1, wherein one of said walls has a mixed term-hygrometer sensor, only the sensor being located inside the shrine (1), the reader being outside the shrine (1).

7. The shrine (1) according to claim 1, wherein said inert gas is nitrogen.

8. A preservation process of mummified organic remains, comprising the steps of:
a) providing a shrine provided with two PTFE-glass taps (4, 5), a gaseous chemical line (6), connected to an inlet tap (4), a discharge pipe (8) connected to an outlet tap (5) and connected to an expansion vessel (9) provided with a hygrometer for recording the relative moisture of the outlet flow;
b) connecting said gaseous chemical line (10) to an inert gas source, producing a dry gas flow;
c) stopping the inert gas delivery keeping the shrine in overpressure;
d) leave the closed shrine resting for an extended period of time, thus promoting gaseous exchanges between the mummified remains and the inert gas atmosphere;
e) repeating the steps from (b) to (d) until the moment in which the detected output moisture is not lower than 40%.

9. The process according to claim 8, wherein the inert gas is subjected to scrubbing in a vessel (7) containing anhydrous calcium carbonate, in order to provide a total and complete dehydration of the inert gas.

10. The process according to claim 8, wherein the inert gas, after its passage in the vessel containing anhydrous calcium carbonate (7), is subjected to scrubbing in further vessels containing antimicrobial substances in order to eliminate possible contaminating biological agents.

11. A process according to claim 8, wherein for each delivery, the inert dry gas flow is maintained at least for one hour or for some hours, indicatively about two hours per each shrine (1) cubed metre.

12. The process according to claim 8, wherein the resting time is at least one day, e.g. two days.

13. The process according to claim 8, wherein the steps from (b) to (e) are repeated after a period equal to at least 30 days.

14. The process according to claim 8, wherein said inert gas is nitrogen.
